# EUROPEAN PATENT SPECIFICATION

(11) **EP 1 998 903 B1**
(45) Date of publication and mention of the grant of the patent: **11.05.2011**
(21) Application number: 07712414.7
(22) Date of filing: 01.03.2007
(51) Int. Cl.: B05D 7/14, B29C 47/02, B29C 63/48, B29C 63/08, F16L 58/10

(54) **APPARATUS FOR THE ANTICORROSION COATING AND THE THERMALLY INSULATING COATING OF TUBULAR BODIES AND CONDUITS FOR THE TRANSPORT OF FLUID**
VORRICHTUNG ZUR KORROSIONSSCHUTZBESCHICHTUNG UND WÄRMEISOLIERSCHICHT FÜR RÖHRENFÖRMIGE KÖRPER UND LEITUNGEN FÜR DEN TRANSPORT VON FLUID
APPAREIL DE REVETEMENT ANTICORROSION ET D'ISOLATION THERMIQUE DE CORPS TUBULAIRES ET DE CONDUITS DESTINES AU TRANSPORT DE FLUIDES

(30) Priority: 08.03.2006 IT GE20060031
(43) Date of publication of application: 10.12.2008
(73) Proprietor: SOCOTHERM S.p.A., 36100 Vicenza (IT)
(72) Inventor: CULZONI, Fernando, I-42015 Correggio (IT)
(74) Representative: Porsia, Attilio
(86) International application number: PCT/EP2007/051964
(87) International publication number: WO 2007/101818

(56) References cited:
- WO-A-03/020494
- CA-C- 2 253 225
- DE-A1- 1 427 625

## Description

This invention relates to an apparatus for the anticorrosion and thermally insulating coating of tubular bodies and conduits for the transport of fluids in workshops, in the field or on lay barges.

In the construction of conduits for the transport of fluids, such as for example gas pipelines, oil pipelines, water pipelines, etc., metal pipe having external anticorrosion and thermally insulating coatings and tubular bodies, referred to as "fittings", of various shapes and dimensions, such as for example elbows, "T" connections, reducers, etc., which have the function of connecting such metal pipes together, are used. When coating is applied in the workshop the ends of these fittings are left exposed, that is without coating, over a certain distance so that they can be subsequently welded to straight lengths of pipe or other connecting members either in the workshop or in the field, thus making the connecting joints.

At the present time the connecting joints between pipes and fittings are coated in workshops, in the field or on lay barges generally using cold sealed plastics tapes, thermoplastic resins, thermohardening resins and heat-shrinking sleeves. When these types of coatings are used, the physical and mechanical properties of the coating on the fittings and the joints are inferior to those of the coating on the straight pipes. This occurs in particular in the case of pipes coated with syntactic PE/PP or PE/PP polyethylene/polypropylene foam using the known three-layer or multilayer method, as at the present time there is no suitable procedure. In addition to this, at the present time the coating of fittings is essentially based on operations of the manual and conventional type, i.e.: sandblasting the metal surface of the fitting through positioning the tubular body on a suitable carriage or hook which moves on rails and placing it in a sandblasting booth where it is sandblasted manually using an air nozzle with metal shot by an operator or sandblasted by mechanical shot turbines located on the walls of the booth; the fitting is heated, removed from the sandblasting booth and placed on a suitable carriage or hook, inserting it into an air-blown furnace to heat it to a suitable temperature for the subsequent coating process, for example up to approximately 250°C if the three-layer method is used. The fitting is coated, removed from the air-blown furnace and placed on a suitable carriage or hook and the required coating is applied as a spray. If the three-layer method of coating using thermoplastic materials is used, the heated part removed from the furnace is coated through the manual application of a first layer of a powder or liquid epoxy primer followed in quick sequence by spraying adhesive PE or PP copolymer powder. The abovementioned method is appropriate for coating thicknesses up to approximately 500-1000 microns. For coatings of greater thickness, for example up to 3-4 mm, it is necessary to repeat the operation of heating the part and applying resin several times in order to obtain the correct temperature for fusion and adhesion of the new layer of powder applied. Often the adhesion between the layers of resin applied to the parent coating is critical in the case of joints, because of the difficulty of achieving the narrow temperature range which provides good adhesion between the layers. In the case of large thickness coatings (i.e. 10-100 mm) using compact PE/PP, or PE/PP, PP/PPS (syntactic) foam the procedure is as follows: the heated part is coated by the application through manual spraying of a first layer of epoxy primer followed in quick sequence by the sprayed application of adhesive copolymer powders, and a metal mould is then applied around the pipe in order to create a gap of certain size which has to be filled through the injection of molten PE/PP or PES/PPS. In the case of coated elbows this mould is made of segments according to the minimum permitted thickness at the ends of the segment and this gives rise to an enormous loss of time and some difficulty in coating elbows.

From what has been stated above it is obvious that known methods of coating have a number of disadvantages, above all associated with manual operations, and are therefore dependent upon the ability of an operator, and also have various critical factors such as: temperatures which are difficult to control and repeat, nonhomogeneous adhesion of the various coatings, non-uniform coating thicknesses, unspecified times for performing the coating stages, results which are difficult to repeat with the same characteristics, and the technical impossibility of obtaining coatings on fittings having the same characteristics as PE/PP, PES/PPS and PE/PP foam multilayer coatings which are currently achieved on straight pipes.

The document DE 1427625A1, which is considered as to be the closest prior art, describes an apparatus for coating articles comprising a chamber having a port therein defined by substantially annular means to discharge a substantially continuous centripetal jet curtain of solid particles upon an article passed through said port in the confluence of said discharged particles, manifold means for essentially uniformly distribuiting said particles prior to discharge of the same through said annular means, a plurality of supply conduits for delivering particles to said manifolds means, a plurality of exhaust conduits for removing air from said chamber as well as air-entrained particles exceeding the quantity of particles employed in the coating operation within said chamber, said exhaust conduits being connected to exhaust means sufficient to create a reduced pressure within said chamber as compared to environmental pressure outside said chamber, thereby to effect a flow of external air through said port into said chamber for obstructing escape of said discharged particles outwardly of said port, and means connecting said exhaust conduits to said supply conduits to thereby provide an enclosed continuous path permitting flow of particles into and out of said chamber.

The method and apparatus described in DE 1427625A1 have a number of disadvantages: the coating realized by said apparatus is not complete, since it is not provided for a final coating for the tubular elements; furthermore, the apparatus according to DE 1427625A1 is realized such that it is impossible to coat a curved tubular element or fitting in a continuous and uninterrupted way, since, among other things, the coater is a substantially cylindrical element.

The main object of this invention is therefore to overcome the disadvantages of the known methods and apparatus mentioned above through an apparatus for the anticorrosion and thermally insulating coating of fittings, joints and fluid transport conduits in workshops, in the field or on lay barges which guarantees effective and uniform strength in the coating and, furthermore, which guarantees an uniform and continuos coating in the case of curved tubular elements or fittings.

This object is accomplished through this invention by means of an apparatus as claimed in claim 1.

In the present apparatus for the anticorrosion and thermally insulating coating of tubular bodies and conduits for the transport of fluids in workshops, in the field or on lay barges, advantageously, the coating is complete, uniform and realized in a continuous way, thanks to the provision of three treatment devices comprising a lenticular and annular body and moving supporting equipment through which the tubular element can move forward and if encessary to rotate.

Other features and advantages of this invention will be more apparent from the following description, provided by way of example and without restriction with reference to the appended drawings, in which:
- Figure 1 illustrates a perspective view of a length of conduit for the transport of fluids on which lenticular annular devices are positioned,
- Figures 2a, 2b and 2c illustrate perspective views of a curved tubular body for the transport of fluids supported by moving equipment according to this invention, illustrated in three different positions at sequential stages during coating,
- Figure 3 illustrates a perspective view of a first embodiment of a lenticular annular sandblasting device according to this invention, positioned around the curved length of conduit for the transport of fluids,
- Figure 4 illustrates a perspective view of a first embodiment of a device having a lenticular annular structure according to this invention for induction heating and delivering first epoxy and adhesive copolymer powder positioned around a curved section of conduit for the transport of fluids,
- Figure 5 illustrates a perspective view of a first embodiment of a final coating device according to this invention, with a lenticular extrusion cross-head positioned around a curved length of conduit for the transport of fluids,
- Figure 6 illustrates a view in lateral elevation and cross-section of a first embodiment of the lenticular extrusion cross-head of the device in Figure 5,
- Figure 7 illustrates a view in lateral elevation and cross-section of a second embodiment of the lenticular extrusion cross-head of the device in Figure 5,
- Figure 8 illustrates a perspective view of a first embodiment of the final coating device provided with a rotating extrusion head positioned around a curved length of conduit for the transport of fluids,
- Figure 9 illustrates a perspective view of a first embodiment of the final coating device provided with a reel, having a lenticular annular structure and positioned around a curved length of conduit for the transport of fluids, and
- Figure 10 illustrates a view in lateral elevation and cross-section of the flat rotating extrusion head in Figure 8.

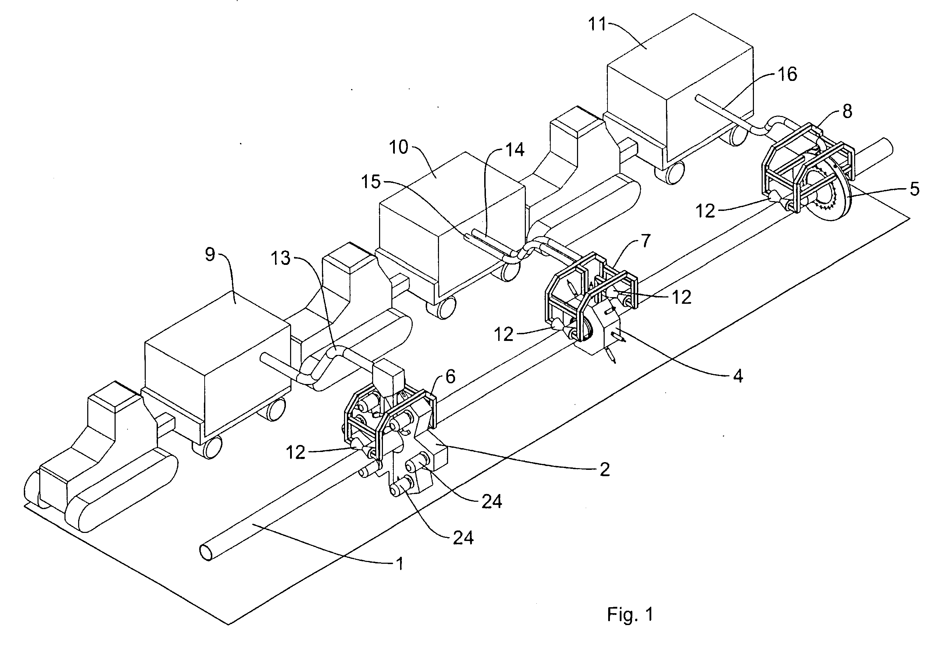

With reference to the appended drawings and with particular reference to Figure 1 thereof, 1 indicates a length of conduit for the transport of fluids about which are located in sequence: a sandblasting device 2 having a preferably openable lenticular annular structure comprising a series of six turbines 24 for projecting metal shot and provided with a corresponding transfer structure 6 straddling the said straight length 1 of the conduit, a device 4 having a preferably openable lenticular annular structure for induction heating and delivering epoxy primer and adhesive copolymer, provided with a corresponding transfer structure 7, and a final coating device 5 having a preferably openable lenticular annular structure provided with a corresponding transfer structure 8. Three drive means 9, 10, 11 provided with corresponding motive power and capable of drawing and causing devices 2, 4 and 5 to move along said length 1 of the conduit through suitable guide rollers 12 with which transfer structures 6, 7 and 8 of those devices 2, 4 and 8 are provided are shown parallel to the length of conduit 1 requiring coating. The metal shot present in drive means 9 is delivered to sandblasting device 2 via a corresponding feed conduit 13. The epoxy primer and adhesive copolymer, which may be liquid or powder, are instead contained in drive means 10, from which they are delivered to device 4 for heating and applying a said epoxy primer and said copolymer through two feed conduits 14 and 15. The final coating material for length 1 of the conduit is instead contained in drive means 11 and is delivered to final coating device 5 via a corresponding feed conduit 16. The dimensions of the lenticular structure forming devices 2, 4 and 5 varies according to the longitudinal axis of the conduit which has to be coated, between approximately 50 and approximately 400 m, and preferably between 100-200 mm, in order that it can operate on tubular bodies or straight or curved lengths of pipe having a minimum radius of curvature equal to twice the diameter of the tubular body.

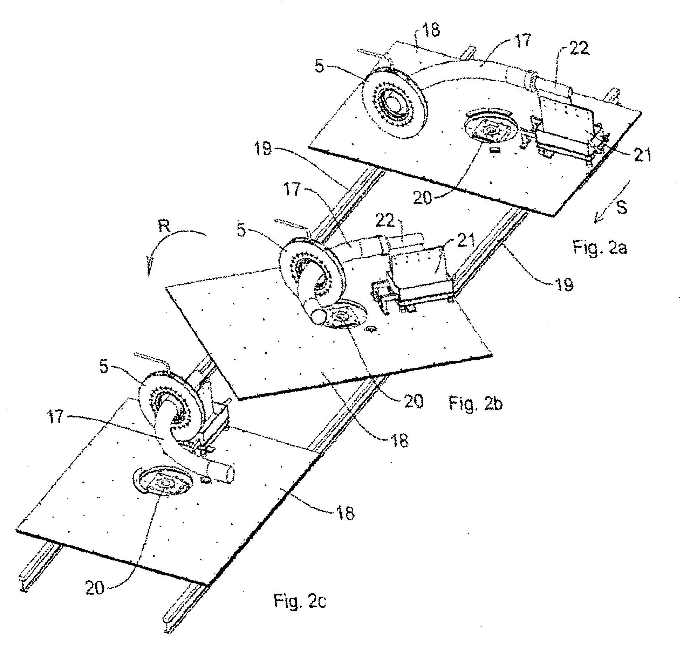

Thus in the case of conduits in the field or in the workshop having straight and curved lengths as illustrated in Figure 1, devices 2, 4 and 5 are moved along the conduit requiring coating. In the case of fittings or curved sections, which generally comprise an intermediate curved length and two straight lengths welded to the ends, see for example curved length 17 in Figures 2a, 2b, 2c, a suitable moving device is used in order to proceed with the various stages of coating which will be described below. This device comprises a motor-driven table 18 positioned on two parallel rails 19 and provided centrally with a rotation pin 20. This motor-driven table 18 can therefore run along said tracks 19 and rotate about said rotation pin 20. Said motor-driven table 18 comprises a pair of supporting plates 21 on one side between which there is inserted a mandrel 22 supporting curved fitting 17 fixed to one extremity thereof. Preferably this pair of plates 21 is located on motor-driven table 18 in such a way that the distance between rotation pin 20 and said plates 21 is equal to the radius of curvature of curved fitting 17 requiring treatment. In the figures, final coating device 5 described in Figure 1 is illustrated by way of example. The ends of such curved fitting 17 are positioned at the same height with respect to motor-driven table 18 beneath. As will be seen below, curved fitting 17 is caused to pass through devices 2, 4, 5 in sequence, causing motor-driven table 18 to move in the direction of arrow S in Figure 2a and causing it to rotate in the direction of arrow R in Figure 2b in order to follow the radius of curvature of the curved length until the situation in Figure 2c is reached, where the said motor-driven table has travelled a particular length along tracks 19 and has rotated through 90° with respect to the position in Figure 2a. In fact device 5, which is positioned close to the free end of curved fitting 17 in Figure 2a is positioned at the end bearing mandrel 22 in Figure 2c.

As an alternative to the systems for moving devices 2, 4 and 5 by corresponding drive means 9, 10 and 11 in Figure 1 and to motor-driven table 18 moving the tubular body in Figures 2a, 2b, 2c, the tubular body which has to be coated can be supported on suitable saddles mounted on spherical feet which move freely on a suitable plane and follow all the movements of the tubular body with respect to the plane. The tubular body is caused to move forward mechanically through the various devices having a lenticular annular structure by means of a pair of suitable travelling rollers acting on the upper and lower generatrices of the tubular body. The spherical supporting feet disappear beneath the edge of the bench at the lenticular annular device and then pick up the tubular body again downstream thereof.

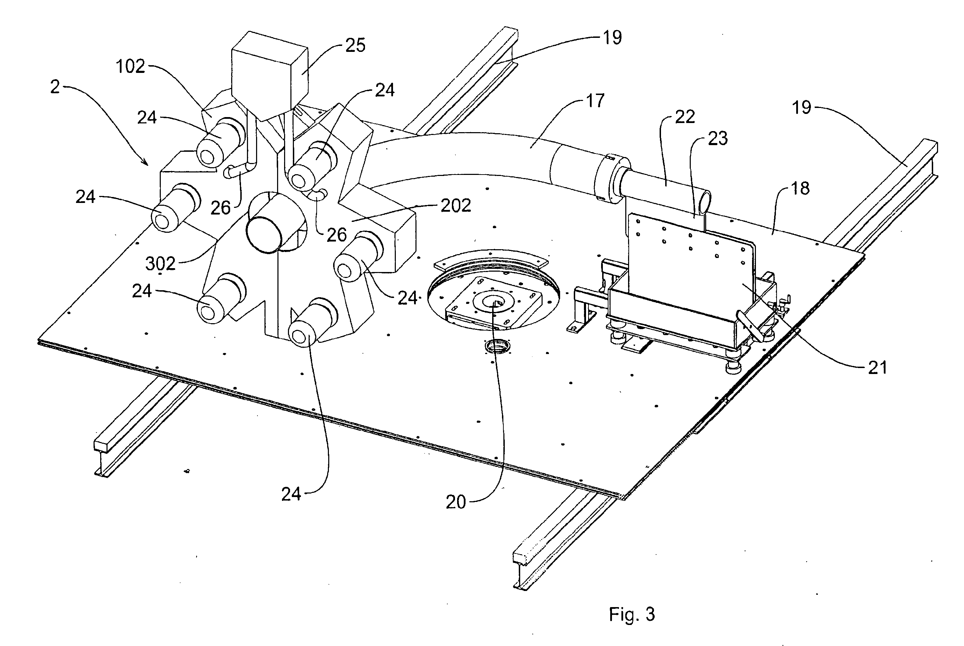

Figure 3 illustrates sandblasting device 2 of lenticular annular structure in Figure 1 positioned through a corresponding supporting frame, which is not shown, on motor-driven table 18 in Figures 2a, 2b, 2c running on two rails 19 and rotating with respect to pin 20. Mandrel 22, which comprises a blade 23 which is attached to plates 21 through an operation carried out offline and upstream from the various coating stages which have to be performed on said curved fitting 17 is attached to one extremity of curved fitting 17. This sandblasting device 2 is located at the free end of curved fitting 17, in the same way as device 5 in Figure 2a, and comprises two half shells 102 and 202 which can preferably be separated from each other for fitting the same in the case of work on a conduit in the field, and a central through hole 302 through which said curved fitting 17 passes. Each of these half shells 102 and 202 comprises three sandblasting turbines 24 which project metal shot in a radial direction towards curved fitting 17 requiring coating. The six turbines 24 located in two half shells 102 and 202 are substantially located on a circumference corresponding to the periphery of sandblasting device 2 and are positioned at the same distance from each other and at the same distance from the outer surface of the curved fitting. The metal shot is fed to each of the two half shells 102 and 202 and then to the six turbines 24 through two corresponding conduits 26 connected to a bin 25 holding the shot. The number of turbines 24 in two half shells 102 and 202 may vary according to the diameter of the tubular body or length of conduit which has to be coated, in order to ensure complete cleaning of the entire surface of the tubular body.

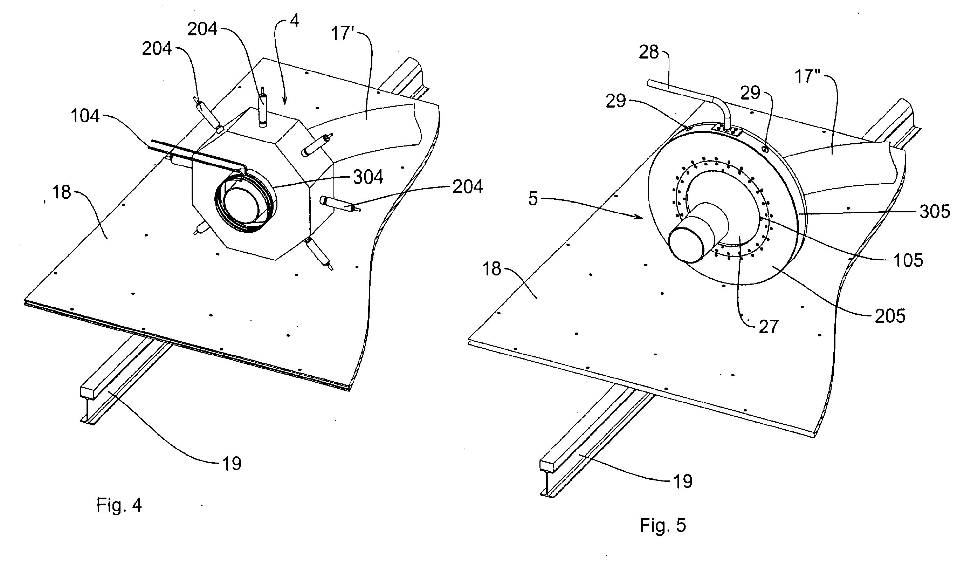

Figure 4 illustrates device 4 of lenticular annular structure in Figure 1 for heating and simultaneously applying the epoxy primer and adhesive copolymer. This device 4 is preferably openable and is positioned on motor-driven table 18 so that it can move and rotate with respect to layers 19. In addition to this, said device 4 is located at the free end of curved fitting 17' of the conduit which has undergone sandblasting treatment by means of the sandblasting device in Figure 3, by means of a central through hole 304 with which the device is provided. This fitting 17' will be supported by mandrel 22 and plates 21 in a manner which is wholly similar to that described above. This device 4 comprises a coil 104 for induction heating of curved fitting 17' which precedes a series of nozzles 204 for the application of epoxy primer and adhesive copolymer to the surface of said curved fitting 17'. These nozzles 204 are substantially located on a circumference and are directed radially towards said curved fitting 17', from which they are equally spaced. Also these nozzles 204 are equally spaced from each other along the circumference on which they are located.

Figure 5 illustrates final coating device 5 of lenticular annular structure in Figure 1. This device 5 is preferably openable and is located on motor-driven table 18 in a similar way to devices 2 and 4 in the preceding figures at the free end of curved fitting 17" of the conduit, by means of a central through hole 105 with which the device is provided. This curved fitting 17" has undergone sandblasting treatment through device 2 and heating and the application of epoxy primer and adhesive copolymer treatment through device 4. This device 5 comprises a lenticular cross-head 205 for the extrusion of a sleeve 27 of coating material such as polyethylene/polypropylene resin (PE/PPP), or syntactic PE/PP or PE/PP foam. As an alternative these materials may be compact thermohardening resins, for example polyurethane, epoxy, polyester, silicone or other resins, expanded thermohardening resins or syntactic thermohardening resins. This coating material is fed to lenticular head 205 of device 5 via a suitable conduit 28 connected to holes 29 provided in the annular border 305 of the body of said device 5 in a radial direction with respect to curved fitting 17".

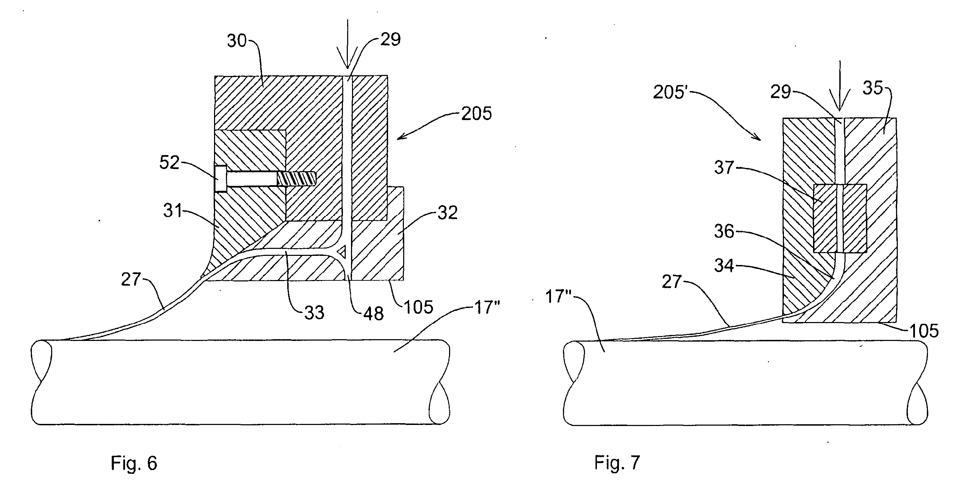

Figure 6 illustrates a first embodiment of lenticular cross-head 205 in device 5. This lenticular head 205 comprises a posterior part 30 in which radial hole 29 is provided for feeding coating material circular anterior extrusion lip 31 attached to the said posterior part by suitable means 52. This first anterior circular extrusion lip 31 is connected to a second circular extrusion lip 32 positioned beneath the posterior part 30 of the head and is crossed by a channel 33 communicating with radial hole 29 and comprises anteriorly a substantially longitudinal section with respect to curved fitting 17" of the pipe requiring coating. The coating material exits from this channel 33 between the extremities of the two circular lips 31 and 32 in such a way as to form the sleeve 27 of coating material on the surface of curved fitting 17" of the conduit requiring coating. Radial hole 29 also communicates with channels 48 delivering coating material provided circumferentially in second circular lip 32 in the case where for example this coating material is polyolefin powder material.

Figure 7 illustrates a second embodiment of lenticular cross-head 205' in which the latter comprises a first anterior circular extrusion lip 34 and a second posterior circular extrusion lip 35 between which there is a channel 36 forming sleeve 27 of coating material around the outer surface of curved fitting 17" requiring coating. This channel 36 comprises a first substantially vertical part which passes through a multiply perforated distribution ring 37 located between said circular lips 34 and 35 and a second part which is substantially longitudinal with respect to fitting 17" requiring coating which faces the anterior part of cross-head 205'. Regardless of the type of cross-head however, device 5 is fixed and curved fitting 17" moves through central through hole 105 in said device 5 as a result of translational and rotational movement of motor-driven table 18.

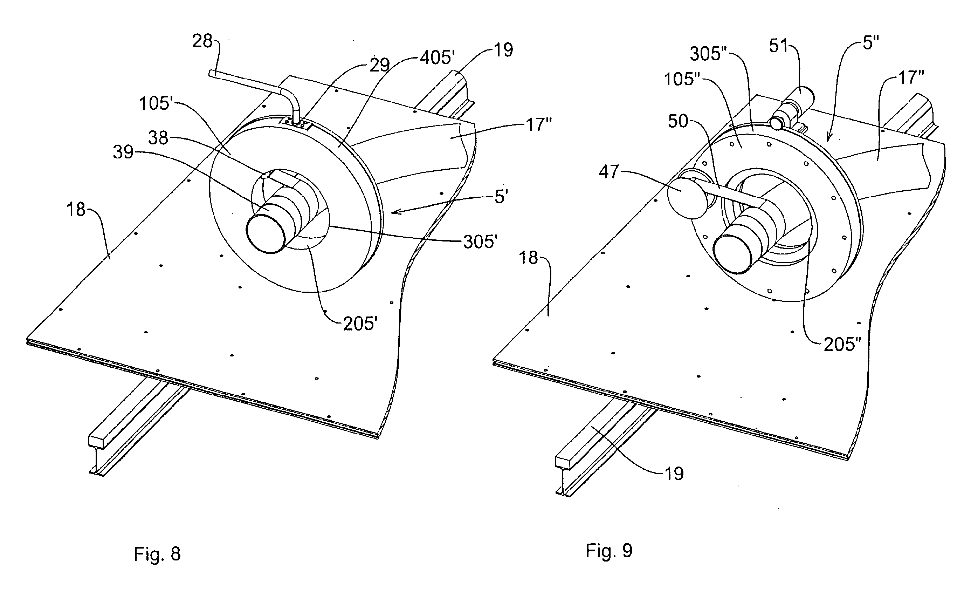

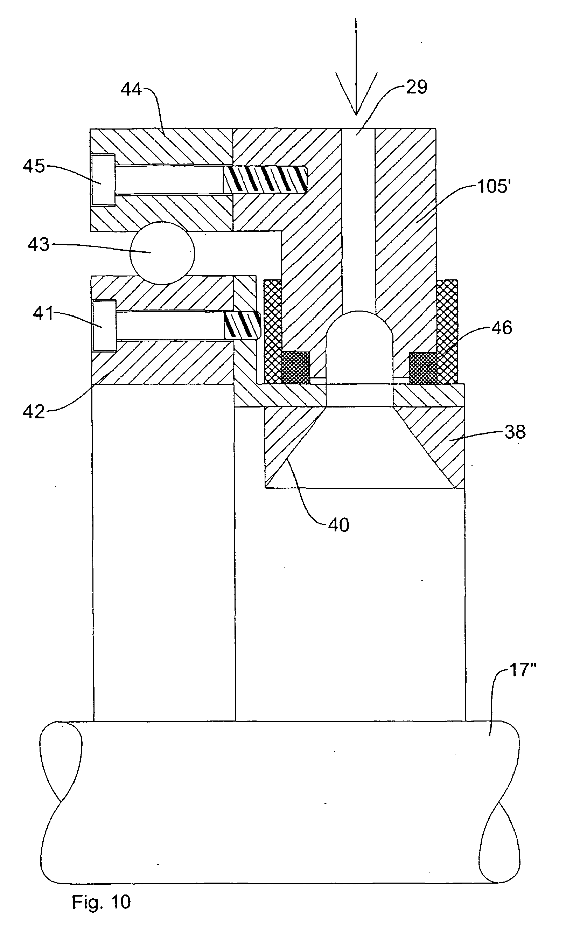

Figure 8 illustrates a first embodiment of final coating device 5' for curved fitting 17" located on motor-driven table 18 which can run on two rails 19 and rotate with respect thereto. This device comprises a preferably openable lenticular body 105' provided with a central through hole 305' in which the free end of curved fitting 17" is positioned. A rotating head 38 for the extrusion of a strip 39 of polyolefin coating material wound as a strip about that curved length is positioned on the inner annular edge 205' of that lenticular body 105'. This coating material may be for example compact, expanded or syntactic polyethylene/polypropylene. The material is fed through radial hole 29 provided in the outer annular edge 405' of lenticular body 105', which is connected to corresponding coating material feed conduit 28. This rotating extrusion head 38 is illustrated in cross-section in Figure 10 and comprises a final opening 40 of increasing cross-section delivering strip 39 of coating material. This final opening 40 communicates with radial coating material feed hole 29 located in the lenticular body of device 5'. The said rotating head 38 is connected through suitable attachment means 41 to a first rotating ring 42 which rotates through suitable movement means 43 such as bearings with respect to a second fixed ring 44 attached to lenticular body 105' through suitable means 45. Provision is made for suitable annular seals 46 between this rotating head 38 and lenticular body 105'. In this example in Figure 8 rotating head 38 can coat curved fitting 17" with a flat strip 39, but, as an alternative, through suitable variation in the shape of final opening 40 in Figure 10, the coating material may be extruded from that head in the form of a corrugated strip, a Z-shaped strip, a T-shaped strip, as a tubular strip, or in any form or cross-section in order to produce a strip which through its helical motion is spirally wound onto the tubular body in any shape and thickness. While tubular body/curved fitting 17" advances through central through hole 305' in lenticular body 105' through the action of motor-driven table 18, rotating head 38 performs a substantially helical motion with respect to said curved tubular body 17" and produces said strip 39. This first rotating ring 42 may also bear an appropriate pressing roller, preferably of silicone rubber, which performs a rotational/revolutionary motion about tubular body 17 requiring coating and exerts pressure on the outer surface of that tubular body 17" at the point of first contact between strip 39 therewith in order to shape said strip 39 around tubular body 17" even more effectively and prevent air from being trapped between said strip 39 and that tubular body 17".

Figure 9 illustrates a first embodiment of final coating device 5" for curved fitting 17" comprising a preferably openable lenticular ring 105" having a central through hole 205" in which the free end of curved fitting 17" requiring coating is positioned. This lenticular ring 105" which rotates within the tubular body comprises a reel 47 close to outer annular edge 305" on which reel is wound a single or multilayer tape 50 of polyolefin material for coating the outer surface of curved tubular body 17". This lenticular body 105" rotates about said length 17" which moves through said central through hole 205" as a result of the translational and rotational motion of motor-driven table 18 on rails 19 through the action of suitable drive means 51.

With reference to the figures described, the method for the anticorrosion and thermally insulating coating of conduits for the transport of fluids according to this invention is as follows: the tubular body or conduit requiring coating, for example curved fitting 17, is mounted on metal plates 21 by means of supporting mandrel 22, the metal plates are then attached to motor-driven table 18 in such a way that they are in line with the axis of the straight length of tubular body bearing mandrel 22. At this point motor-driven table 18 is caused to move forward on rails 19 and if necessary rotate about rotation pin 20 so that the free end of curved fitting 17 is introduced into central through hole 302 of sandblasting device 2. At this point turbines 24 of said device 2 are brought into operation in order to deliver metal shot to curved fitting 17". Once this first stage of coating treatment has been completed tubular body 17" is subjected to heating and the application of epoxy primer and adhesive copolymer by means of device 4 in the manner described with reference to Figure 4. Subsequently, when curved tubular body 17' has been sandblasted and heated and the primer and copolymer have been applied to it, it passes to the final coating stage by means of device 5, 5', 5" described in its various embodiments in Figures 5-10. Substantially therefore, in the case of lengths of conduit such as in Figure 1, devices 2, 4 and 5 may be moved in sequence along the pipe by means of the corresponding drive means, while in the case of curved or straight fittings the tubular body attached to motor-driven table 18 is caused to move through devices 2-4-5 in the various embodiments described in Figures 3-10 until treatment is complete.

Three examples of implementation of this method will be described below.

Example 1: Anticorrosion coating of the PP type in three layers having a thickness of 4 mm on a tubular body having the following characteristics: diameter 10", 90° elbow, radius of curvature equal to four times the pipe diameter, length of the straight lengths welded to the ends of the curved part equal to one linear metre each.

The following materials were used: metal shot, powder epoxy primer, powder PP adhesive copolymer, granulated PP polymer.

Procedure: steel plates 21 bearing the tubular body by means of appropriate mandrel 22 and appropriately prepared off-line were placed on motor-driven table 18 and the tubular body was sandblasted to grade SA 2.5 using metal shot operating as indicated with reference to Figure 2 using sandblasting device 2 instead of device 4. After sandblasting of the tubular body was complete, the latter was delivered by lateral movement of motor-driven table 18 to device 4 to heat it to 220°C and apply 100-150 microns of primer and 80-120 microns of adhesive copolymer. After the stage of heating and application of the primer and adhesive the tubular body was delivered by means of motor-driven table 18 to device 5' bearing rotating head 38 and an extruded strip of PP (polypropylene) was then wound around that tubular body.

Example 2: Anticorrosion coating with three layers of PP of thickness 4 mm on a pipe connecting joint coated with PP having the following characteristics: diameter 10", thickness of the PP coating 4 mm, length of the joints requiring coating 300 mm.

The following materials were used: metal shot, powder epoxy primer, powder PP adhesive copolymer, granulated PP polymer.

Procedure: The exposed metal part of the joint was sandblasted to grade SA 2.5 using metal shot by moving sandblasting device 2 along the joint. The metal pipe in the connecting joint area was heated to 220°C by means of induction heating device 4 and 100-150 microns of epoxy primer and 80-120 microns of powder adhesive copolymer were applied to the joint in quick succession. The joint was transferred to device 5" bearing rotating extrusion head 38 and the pressure roller and the joint was coated by winding an extruded strip 39 of PP thereon suitably overlapping the parent coating on the connected pipes.

Example 3: Anticorrosion and thermally insulating coating ("wet insulation") for a pipe connection joint coated with 80 mm of syntactic PP, having the following characteristics: diameter 10", thickness of the compact PP coating 80 mm, length of the joint requiring coating 300 mm.

The following materials were used: metal shot, powder epoxy primer, powder PP adhesive copolymer, granulated PP polymer.

Procedure: the metal part of the joint was sandblasted to grade SA 2.5 using metal shot and then heated and coated with primer and PP adhesive as in example 2. Device 5" bearing rotating extrusion head 38 was transferred to the joint and the joint was coated by winding extruded strip 39 of PP thereon in several layers up to the desired thickness of 80 mm, suitably overlapping the parent coating of the connected pipes, reduced to the thickness of 4 mm.

## Claims

1. Apparatus for the anticorrosion and thermally insulating coating of tubular bodies, fittings, joints and conduits for the transport of fluids, comprising: a first device (2) for sandblasting a tubular body (1, 17, 17', 17") requiring treatment provided with a plurality of turbines (24) for the delivery of granular sandblasting material, a second device (4) provided with first means (104) for induction heating and second means (204) for delivery of an epoxy resin and an adhesive resin to the said tubular body (1, 17, 17', 17"), and a third final coating device (5, 5', 5") provided with suitable means (205, 48, 47) for the delivery and/or extrusion of thermoplastic, thermohardening or other coating material which is to be applied to the tubular body (1, 17, 17', 17"), the said first, second and third devices (2, 4, 5, 5', 5") being connected to means (6-11) enabling them to move in sequence along the tubular body (1, 17, 17', 17") requiring treatment and, in the case of curved fittings, the said tubular body (1, 17, 17', 17") being provided with moving supporting equipment (18, 21) through which the said tubular body (1, 17, 17', 17") can move forward and if necessary rotate in the said first, second and third treatment devices (2, 4, 5, 5', 5"), said first, second and third treatment devices (2, 4, 5, 5', 5") being provided with lenticular annular bodies which are openable so that they can be positioned on the tubular body requiring treatment in the case of treatment in the field or on a lay barge.

2. Apparatus according to claim 1, **characterised in that** the dimensions of the said lenticular annular structure forming the said first, second and third devices varies according to the longitudinal axis of the tubular body (1, 17, 17', 17") requiring coating between approximately 50 and approximately 400 mm and preferably between 100 - 200 mm.

3. Apparatus according to claim 1, **characterised in that** it comprises at least one drive means (9, 10, 11) for each of the said first, second and third devices (2, 4, 5) containing material which is to be applied to the tubular body according to the stage of treatment which has to be performed on the said tubular body (1, 17, 17', 17"), each of the said first, second and third devices (2, 4, 5) being connected to the corresponding drive means (9, 10, 11) through a corresponding conduit (13, 14, 15, 16) feeding the corresponding material which has to be applied on each of the said first, second and third devices (2, 4, 5) being provided with a corresponding structure (6, 7, 8) for drawing it along the tubular body (1,17,17',17") requiring treatment.

4. Apparatus according to claim 1, **characterised in that** the said mobile equipment comprises a motor-driven table (18) which is able to run along rails (19) and rotate with respect to a corresponding rotation pin (20) positioned substantially in the centre thereof, a pair of plates (21) supporting one end of the tubular body (17) requiring coating being fixed onto the said motor-driven table (18) and the other end of the said tubular body (17) being inserted by means of the said motor-driven table (18) into one of the said first, second and third devices (2, 4, 5) depending upon the stage of treatment which has to be performed on the said tubular body (17).

5. Apparatus according to claim 1, **characterised in that** said final coating material comprises polyethylene-polypropylene resins, polyethylene-propylene foam, syntactic polyethylene-polypropylene, compact thermohardening resins such as polyurethane, epoxy, polyester, silicone or other resins, expanded thermohardening resins, syntactic thermohardening resins or the like.

6. Apparatus according to claim 5, **characterised in that** the said pair of plates (21) is fitted onto the motor-driven table (18) in such a way that their distance from the rotation pin (20) is approximately equal to the radius of curvature of the curved tubular body (17) requiring treatment.

7. Apparatus according to claim 1, **characterised in that** the said tubular body (17) requiring coating is supported by suitable saddles mounted on spherical feet which move freely on a suitable plane and follow all the movements of the tubular body with respect to the plane, the tubular body being move by the various devices having a lenticular annular structure by means of a pair of appropriate translational rollers acting on the upper and lower generatrices of the said tubular body and the spherical supporting spheres disappearing beneath the edge of the plane where the lenticular annular equipment is located in order to then pick up the tubular body downstream thereof.

8. Apparatus according to claim 1, **characterised in that** the said sandblasting device (2) comprises a pair of half shells (102, 202) which are joined together and can be separated from each other and are provided centrally with a through hole (302), with the said turbines (24) for the delivery of granular sandblasting material being positioned close to the periphery of the said half shells (102, 202) and the said turbines (24) being arranged radially with respect to the tubular body (17) requiring treatment and are equidistant from each other and with respect to the said tubular body (17).

9. Apparatus according to claim 1, **characterised in that** the said sandblasting device (2) comprises a bin (25) containing granular sandblasting material, conduits (26) feeding the said turbines (24) with the said granular sandblasting material leading from the said bin (25).

10. Apparatus according to claim 1, **characterised in that** the said sandblasting device (2) comprises the same number of turbines (24), preferably three, on each of the two half shells (102, 202).

11. Apparatus according to claim 1, **characterised in that** the said second device (4) comprises a coil (104) for induction heating of the tubular body (17') requiring treatment which precedes a series of nozzles (204) applying the epoxy primer and the adhesive copolymer to the surface of the said tubular body (17'), the said nozzles (204) being substantially located on a circumference of the body of lenticular structure of the device (4), equally spaced from each other and radially directed towards the said tubular body (17').

12. Apparatus according to claim 1, **characterised in that** the said third final coating device (5, 5') comprises a lenticular cross-head (205, 205') for extrusion of a sleeve (27) of coating material having a central through hole (105), with a radial hole (29) to feed the coating material via a corresponding external conduit (28) being provided on the outer annular edge (305) of the said lenticular head (205, 205').

13. Apparatus according to claim 1, **characterised in that** the said lenticular head (205) comprises a posterior part (30) in which the said radial hole (29) for feeding coating material is provided and a first anterior circular extrusion lip (31) fixed to the said posterior part by suitable means (52), the said first anterior circular extrusion lip (31) being connected to a second circular extrusion lip (32) located beneath the posterior part (30) of the head and being traversed by a channel (33) communicating with the said radial hole (29).

14. Apparatus according to claim 12, **characterised in that** the said radial hole (29) in the said posterior part of the lenticular head (205) communicates with channels (48) for the delivery of coating material provided circumferentially in the said second circular lip (32).

15. Apparatus according to claim 12, **characterised in that** the said lenticular extrusion head (205') comprises a first anterior circular extrusion lip (34) and a second posterior circular extrusion lip (35) between which there is provided a channel (36) for forming the said sleeve (27) of coating material, the said channel (36) being provided with a first substantially vertical part which passes through a multiperforated distribution ring (37) located between the said circular lips (34, 35) and a second part which is substantially longitudinal with respect to the tubular body (17") requiring coating and facing the anterior part of the said lenticular extrusion hub (205').

16. Apparatus according to claim 1, **characterised in that** the said third device (5') comprises a lenticular body (105') provided with a central through hole (305') on the annular edge (205') of which there is positioned a rotating extrusion head (38) capable of forming a strip (39) of coating material extruded onto the tubular body (17") requiring treatment.

17. Apparatus according to claim 16, **characterised in that** the said strip (39) wound onto the tubular body (1, 17, 17', 17") is of any shape such as a flat shape, a corrugated shape, a Z-shape, a T-shape, tubular or other shape.

18. Apparatus according to claim 16, **characterised in that** the said rotating extrusion head (38) comprises a final opening (40) of increasing cross-section for delivery of the strip (39) of coating material and is in communication with the radial hole (29) delivering coating material provided in the lenticular body (105'), the said rotating head (38) being attached by a suitable attachment means (41) to a first rotating ring (42) which is capable of moving with respect to a second fixed ring (44) which is fixed to the lenticular body (105') by suitable means (45) and with suitable annular seals (46) being provided between the said rotating head (38) and the said lenticular body (105').

19. Apparatus according to claim 18, **characterised in that** the said first rotating ring (42) bears a pressure roller, preferably of silicone rubber, which performs a rotational-revolutionary movement about the tubular body requiring coating.

20. Apparatus according to claim 1, **characterised in that** the said third device (5") comprises a lenticular body (105") having a central through hole (205") and a reel (47) close to its outer annular edge (305") around which reel there is wound a single layer or multilayer tape (50) of polyolefin material for coating the outer surface of the said tubular body (17"), the said lenticular body (105") being capable of rotating about the said tubular body through suitable drive means (51).

## Patentansprüche

1. Vorrichtung zur Aufbringung einer Korrosionsschutz- und Wärmedämmschicht auf röhrenförmigen Körpern, Verbindungselementen, Fügestellen und Leitungen zum Transport von Flüssigkeiten mit: einer ersten Einrichtung (2) zum Sandstrahlen eines zu bearbeitenden röhrenförmigen Körpers (1, 17, 17', 17") mit einer Vielzahl Turbinen (24) zum Fördern von granulatförmigem Sandstrahlungsmaterial, einer zweiten Einrichtung (4), welche erste Mittel (104) zum Induktionsheizen und zweite Mittel (204) zum Aufbringen eines Epoxidharzes und eines Klebeharzes auf den röhrenförmigen Körper (1, 17, 17', 17") aufweist, und einer dritten, abschließenden Beschichtungseinrichtung (5, 5', 5"'), die geeignete Mittel (205, 48, 47) zum Fördern und/oder Extrudieren von thermoplastischem, thermisch aushärtbarem oder anderem Beschichtungsmaterial aufweist, welches auf den röhrenförmigen Körper (1, 17, 17', 17") aufgebracht werden soll, wobei die ersten, zweiten und dritten Einrichtungen (2, 4, 5, 5', 5") mit Mitteln (6-11) verbunden sind, über welche sie der Reihe nach entlang des zu bearbeitenden röhrenförmigen Körpers (1, 17, 17', 17") bewegbar sind, und wobei der röhrenförmige Körper (1, 17, 17', 17") im Falle gekrümmter Verbindungselemente eine sich bewegende Halteausstattung (18, 21) aufweist, durch welche sich der röhrenförmige Körper (1, 17, 17', 17") vorwärts bewegen und, falls erforderlich, in den ersten, zweiten und dritten Bearbeitungseinrichtungen (2, 4, 5, 5', 5") rotieren kann, wobei die ersten, zweiten und dritten Bearbeitungseinrichtungen (2, 4, 5, 5', 5") linsenförmige, ringförmige Körper aufweisen, welche geöffnet werden können, um im Falle einer Bearbeitung im Außeneinsatz oder auf einem Verlegeschiff auf dem zu bearbeitenden röhrenförmigen Körper positioniert werden zu können.

2. Vorrichtung nach Anspruch 1, **dadurch gekennzeichnet, dass** die Abmessungen des linsenförmigen, ringförmigen Aufbaus, welcher die ersten, zweiten und dritten Einrichtungen bildet, entlang der Längsachse des zu bearbeitenden röhrenförmigen Körpers (1, 17, 17', 17") zwischen ungefähr 50 und ungefähr 400 mm und bevorzugt zwischen 100 - 200 mm variieren.

3. Vorrichtung nach Anspruch 1, **gekennzeichnet durch** mindestens ein Antriebsmittel (9, 10, 11) für jede der ersten, zweiten und dritten Einrichtungen (2, 4, 5), welches Material enthält, das gemäß der an dem röhrenförmigen Körper (1, 17, 17', 17") durchzuführenden Bearbeitungsstufe, auf den röhrenförmigen Körper aufgebracht wird, wobei jede der ersten, zweiten und dritten Einrichtungen (2, 4, 5) mit dem entsprechenden Antriebsmittel (9, 10, 11) **durch** eine entsprechende Zuleitung (13, 14, 15, 16) zur Zuführung des entsprechenden Materials verbunden ist, welches an jeder der ersten, zweiten und dritten Einrichtungen (2, 4, 5) aufgebracht werden soll, die eine entsprechende Struktur (6, 7, 8) aufweist, um sie entlang des zu bearbeitenden röhrenförmigen Körpers (1, 17, 17', 17") zu ziehen.

4. Vorrichtung nach Anspruch 1, **dadurch gekennzeichnet, dass** die mobile Ausstattung einen motorisch angetriebenen Tisch (18), welcher an Schienen (19) entlanglaufen und gegenüber einem im Wesentlichen im Zentrum davon positionierten Drehzapfen (20) rotieren kann, und ein Plattenpaar (21) aufweist, welches ein Ende des zu bearbeitenden röhrenförmigen Körpers (17) trägt und auf dem motorisch angetriebenen Tisch (18) fixiert ist, wobei das andere Ende des röhrenförmigen Körpers (17) mittels des motorisch angetriebenen Tisches (18) in eine der ersten, zweiten und dritten Einrichtungen (2, 4, 5) eingeführt wird, je nachdem, welche Bearbeitungsstufe an dem röhrenförmigen Körper (17) durchgeführt werden soll.

5. Vorrichtung nach Anspruch 1, **dadurch gekennzeichnet, dass** das abschließende Beschichtungsmaterial Polyethylen-Polypropylen-Harze, Polyethylen-Propylen Schaum, syntaktisches Polyethylen-Polypropylen, feste thermisch aushärtbare Harze wie Polyurethan-, Epoxid-, Polyester-, Silikon- oder andere Harze, aufgeschäumte, thermisch aushärtbare Harze, synthetische, thermisch aushärtbare Harze oder dergleichen aufweist.

6. Vorrichtung nach Anspruch 5, **dadurch gekennzeichnet, dass** das Plattenpaar (21) auf dem motorisch angetriebenen Tisch (18) derart angeordnet ist, dass sein Abstand von dem Drehzapfen (20) ungefähr gleich dem Radius der Krümmung des gekrümmten zu bearbeitenden röhrenförmigen Körpers (17) ist.

7. Vorrichtung nach Anspruch 1, **dadurch gekennzeichnet, dass** der zu beschichtende röhrenförmige Körper (17) von geeigneten Auflagern gehalten wird, die auf kugelförmigen Füßen angeordnet sind, welche sich frei auf einer geeigneten Fläche bewegen und allen Bewegungen des röhrenförmigen Körpers gegenüber der Fläche folgen können, wobei der röhrenförmige Körper von den verschiedenen Einrichtungen mit linsenförmiger, ringförmiger Struktur mittels eines Paars geeigneter translatorischer Rollen bewegt wird, die an den oberen und unteren Mantellinien des röhrenförmigen Körpers angreifen und wobei die kugelförmigen Stützkugeln unterhalb der Kante der Fläche verschwinden, an der die linsenförmige, ringförmige Anlage angeordnet ist, um den röhrenförmigen Körper dann auslaufseitig davon aufzunehmen.

8. Vorrichtung nach Anspruch 1, **dadurch gekennzeichnet, dass** die Sandstrahlungseinrichtung (2) ein Paar Halbschalen (102, 202) aufweist, welche zusammengefügt sind und voneinander getrennt werden können, und welche mittig eine Durchführöffnung (302) aufweisen, wobei die Turbinen (24) zum Fördern des granulatförmigen Sandstrahlungsmaterials nah an der Peripherie der Halbschalen (102, 202) angeordnet sind, wobei die Turbinen (24) radial gegenüber dem zu bearbeitenden röhrenförmigen Körper (17) und äquidistant voneinander sowie gegenüber dem röhrenförmigen Körper (17) angeordnet sind.

9. Vorrichtung nach Anspruch 1, **dadurch gekennzeichnet, dass** die Sandstrahlungseinrichtung (2) ein granulatförmiges Sandstrahlungsmaterial enthaltendes Behältnis (25) und Leitungen (26) aufweist, welche den Turbinen (24) das granulatförmige Sandstrahlungsmaterial ausgehend von dem Behältnis (25) zuführen.

10. Vorrichtung nach Anspruch 1, **dadurch gekennzeichnet, dass** die Sandstrahlungseinrichtung (2) auf jeder der beiden Halbschalen (102, 202) dieselbe Anzahl an Turbinen (24), bevorzugt drei, aufweist.

11. Vorrichtung nach Anspruch 1, **dadurch gekennzeichnet, dass** die zweite Einrichtung (4) eine Spule (104) zum induktiven Heizen des zu bearbeitenden röhrenförmigen Körpers (17') aufweist, die einer Reihe von Düsen (204) vorausgeht, welche die Epoxidbeschichtung und das klebende Copolymer auf die Oberfläche des röhrenförmigen Körpers (17') aufbringen, wobei die Düsen (204) im Wesentlichen auf einem Kreisumfang des Körpers mit linsenförmiger Struktur der Einrichtung (4) mit gleichem Abstand voneinander angeordnet und radial zu dem röhrenförmigen Körper (17') ausgerichtet sind.

12. Vorrichtung nach Anspruch 1, **dadurch gekennzeichnet, dass** die dritte, abschließende Beschichtungseinrichtung (5, 5') einen linsenförmigen Spritzkopf (205, 205') zum Extrudieren einer Hülle (27) aus Beschichtungsmaterial mit einer zentralen Durchführöffnung (105) aufweist, welcher eine radiale Öffnung (29) aufweist, um das Beschichtungsmaterial über eine entsprechende externe Leitung (28) zuzuführen, welche an dem äußeren ringförmigen Rand (305) des linsenförmigen Spritzkopfs (205, 205') angeordnet ist.

13. Vorrichtung nach Anspruch 1, **dadurch gekennzeichnet, dass** der linsenförmige Spritzkopf (205) einen hinteren Teil (30), in welchem die radiale Öffnung (29) zur Zuführung des Beschichtungsmaterials angeordnet ist und eine erste vordere umlaufende Extrusionslippe (31), welche an dem hinteren Teil über geeignete Mittel (52) befestigt ist, aufweist, wobei die erste vordere umlaufende Extrusionslippe (31) mit einer zweiten umlaufenden Extrusionslippe (32) verbunden ist, welche unter dem hinteren Teil (30) des Kopfes angeordnet ist und von einem mit der radialen Öffnung (29) kommunizierenden Kanal (33) durchlaufen wird.

14. Vorrichtung nach Anspruch 12, **dadurch gekennzeichnet, dass** die radiale Öffnung (29) in dem hinteren Teil des linsenförmigen Kopfes (205) mit Kanälen (48) zur Zuführung des Beschichtungsmaterials kommuniziert, welche umlaufend in der zweiten umlaufenden Lippe (32) angeordnet sind.

15. Vorrichtung nach Anspruch 12, **dadurch gekennzeichnet, dass** der linsenförmige Kopf (205') eine erste vordere umlaufende Extrusionslippe (34) und eine zweite hintere umlaufende Extrusionslippe (35) aufweist, zwischen welchen zur Bildung der Hülle (27) aus Beschichtungsmaterial ein Kanal (36) ausgebildet ist, wobei der Kanal (36) einen ersten im Wesentlichen vertikalen Teil aufweist, welcher durch einen mehrfach perforierten Verteilerring (37) verläuft, der zwischen den umlaufenden Lippen (34, 35) angeordnet ist, und einen zweiten Teil aufweist, welcher im Wesentlichen längs des zu beschichtenden röhrenförmigen Körpers (17") ausgerichtet ist und dem vorderen Teil des linsenförmigen Extrusionsverteilers (205') zugewandt ist.

16. Vorrichtung nach Anspruch 1, **dadurch gekennzeichnet, dass** die dritte Einrichtung (5') einen linsenförmigen Körper (105') mit einer zentralen Durchführöffnung (305') aufweist, auf deren ringförmigem Rand (205') ein rotierender Extrusionskopf (38) angeordnet ist, der einen Streifen (39) aus Beschichtungsmaterial auf den zu bearbeitenden röhrenförmigen Körper (17") extrudieren kann.

17. Vorrichtung nach Anspruch 16, **dadurch gekennzeichnet, dass** der um den röhrenförmigen Körper (1, 17, 17', 17") gewickelte Streifen (39) flach, wellig, Z-förmig, T-förmig, röhrenförmig oder andersartig ausgebildet ist.

18. Vorrichtung nach Anspruch 16, **dadurch gekennzeichnet, dass** der rotierende Extrusionskopf (38) eine endseitige Öffnung (40) mit einem sich aufweitenden Querschnitt zur Ausgabe des Streifens (39) aus Beschichtungsmaterial aufweist, welche mit der radialen Öffnung (29) zur Zuführung von Beschichtungsmaterial in das linsenförmige Gehäuse (105') kommuniziert, wobei der rotierende Kopf (38) mittels geeigneter Befestigungsmittel (41) an einem ersten rotierenden Ring (42) befestigt ist, welcher gegenüber einem zweiten feststehenden Ring (44) bewegbar ist, der an dem linsenförmigen Gehäuse (105') durch geeignete Mittel (45) befestigt ist und wobei geeignete ringförmige Dichtungen (46) zwischen dem rotierenden Kopf (38) und dem linsenförmigen Gehäuse (105') angeordnet sind.

19. Vorrichtung nach Anspruch 18, **dadurch gekennzeichnet, dass** der erste rotierende Ring (42) eine Druckrolle, bevorzugt aus Silikonkautschuk, trägt, welche eine rotierend umlaufende Bewegung um den zu beschichtenden röhrenförmigen Körper durchführt.

20. Vorrichtung nach Anspruch 1, **dadurch gekennzeichnet, dass** die dritte Einrichtung (5") einen linsenförmiges Körper (105") mit einer mittigen Öffnung (205") und einer nah an ihrer äußeren Ringkante (305") angeordnete Bandrolle (47) aufweist, um welche ein einlagiges oder mehrlagiges Band (50) aus Polyolefin zur Beschichtung der äußeren Oberfläche des röhrenförmigen Körper (17") gewickelt ist, wobei der linsenförmige Körper (105") mittels geeigneter Antriebsmittel (51) um den röhrenförmigen Körper rotieren kann.

## Revendications

1. Installation de revêtement anticorrosion et d'isolation thermique de corps tubulaires, de raccords, de joints et de conduits pour le transport de fluides, comprenant : un premier dispositif (2) de sablage d'un corps (1, 17, 17', 17") tubulaire demandant un traitement pourvu d'une pluralité de turbines (24) pour la distribution de matière granulaire de sablage, un deuxième dispositif (4) pourvu de premiers moyens (104) de chauffage par induction et de deuxièmes moyens (204) de distribution d'une résine époxy et d'une résine adhésive sur le corps (1, 17, 17', 17") tubulaire, et un troisième dispositif (5, 5', 5") final de revêtement pourvu de moyens (205, 48, 47) appropriés de distribution et/ou d'extrusion d'une matière thermoplastique, thermodurcissable ou d'une autre matière de revêtement, qui doit être appliquée au corps (1, 17, 17', 17") tubulaire, les premier, deuxième et troisième dispositifs (2, 4, 5, 5', 5") étant reliés à des moyens (6 à 11) leur permettant de se déplacer en séquence le long du corps (1, 17, 17', 17") tubulaire demandant un traitement et, dans le cas de raccords courbés, le corps (1, 17, 17', 17") tubulaire étant muni d'un équipement (18, 21) mobile de support, par lequel le corps (1, 17, 17', 17") tubulaire peut se déplacer vers l'avant et, si nécessaire, tourner dans les premier, deuxième et troisième dispositifs (2, 4, 5, 5', 5") de traitement, les premier, deuxième et troisième dispositifs (2, 4, 5, 5', 5") de traitement étant pourvus de corps annulaires lenticulaires, qui peuvent s'ouvrir, de sorte qu'ils peuvent être mis en position sur le corps tubulaire demandant un traitement, dans le cas d'un traitement sur site ou sur une barge de pose.

2. Installation suivant la revendication 1, **caractérisée en ce que** les dimensions de la structure annulaire lenticulaire formant les premier, deuxième et troisième dispositifs varient suivant l'axe longitudinal du corps (1, 17, 17', 17") tubulaire demandant un revêtement entre environ 50 et environ 400 mm, de préférence entre environ 100 et 200 mm.

3. Installation suivant la revendication 1, **caractérisée en ce qu'**elle comprend au moins un moyen (9, 10, 11) d'entraînement pour chacun des premier, deuxième et troisième dispositifs (2, 4, 5) contenant de la matière qui doit être appliquée au corps tubulaire suivant l'étape de traitement qui doit être effectuée sur le corps (1, 17, 17', 17") tubulaire, chacun des premier, deuxième et troisième dispositifs (2, 4, 5) étant reliés aux moyens (9, 10, 11) d'entraînement correspondants par un conduit (13, 14, 15, 16) correspondant alimentant en la matière correspondante qui doit être appliquée, chacun des premier, deuxième et troisième dispositifs (2, 4, 5) étant muni d'une structure (6, 7, 8) correspondante pour le tirer le long du corps (1, 17, 17', 17") tubulaire demandant un traitement.

4. Installation suivant la revendication 1, **caractérisée en ce que** l'équipement mobile comprend une table (18) entraînée par un moteur, qui peut rouler le long de rails (19) et tourner par rapport à une broche (20) de rotation correspondante mise en position sensiblement en son centre, une paire de plaques (21) supportant une extrémité du corps (17) tubulaire demandant un revêtement étant fixée sur la table (18) entraînée par un moteur et l'autre extrémité du corps (17) tubulaire étant insérée au moyen de la table (18) entraînée par un moteur dans l'un des premier, deuxième et troisième dispositifs (2, 4, 5) suivant l'étape de traitement qui doit être effectuée sur le corps (17) tubulaire.

5. Installation suivant la revendication 1, **caractérisée en ce que** comprend des résines de polyéthylène-polypropylène, de la mousse de polyéthylène-polypropylène, du polyéthylène-polypropylène syntactique, des résines thermodurcissables compactes telles que du polyuréthane, de l'époxy, du polyester, de la silicone ou d'autres résines, des résines thermodurcissables expansées, des résines thermodurcissables syntactiques ou analogues.

6. Installation suivant la revendication 5, **caractérisée en ce que** la paire de plaques (21) est adaptée sur la table (18) entraînée par un moteur, de manière à ce que leur distance à la broche (20) de rotation soit à peu près égale au rayon de courbure du corps (17) tubulaire courbé demandant un traitement.

7. Installation suivant la revendication 1, **caractérisée en ce que** le corps (17) tubulaire demandant un revêtement est supporté par des selles appropriées montées sur des pieds sphériques qui se déplacent librement sur un plan approprié et suivent tous les mouvements du corps tubulaire par rapport au plan, le corps tubulaire étant déplacé par les divers dispositifs ayant une structure annulaire lenticulaire au moyen d'une paire de rouleaux de translation appropriés agissant sur la génératrice supérieure ou inférieure du corps tubulaire et les sphères sphériques de support disparaissant en dessous du bord du plan où l'équipement annulaire lenticulaire est placé afin de prendre alors le corps tubulaire en amont.

8. Installation suivant la revendication 1, **caractérisée en ce que** le dispositif (2) de sablage comprend une paire d'hémicoquilles (102, 202) qui sont réunies ensembles et qui peuvent être séparées l'une de l'autre et sont munies centralement d'un trou (302) traversant, les turbines (24) de distribution de matière granulaire de sablage étant placées près de la périphérie des hémicoquilles (102, 202) et les turbines étant disposées radialement par rapport au corps (17) tubulaire demandant un traitement et étant équidistantes les unes des autres par rapport au corps (17) tubulaire.

9. Installation suivant la revendication 1, **caractérisée en ce que** le dispositif (2) de sablage comprend une trémie (25) contenant de la matière granulaire de sablage, des conduits (26) alimentant les turbines (24) en la matière granulaire de sablage partant de la trémie (25).

10. Installation suivant la revendication 1, **caractérisée en ce que** le dispositif (2) de sablage comprend le même nombre de turbines, de préférence trois, sur chacune des deux hémicoquilles (102, 202).

11. Installation suivant la revendication 1, **caractérisée en ce que** le deuxième dispositif (4) comprend une bobine (104) de chauffage par induction du corps (17') tubulaire demandant un traitement, qui précède une série de buses (204) appliquant le revêtement primaire en époxy et le copolymère adhésif à la surface du corps (17') tubulaire, les buses (204) étant placées sensiblement sur une circonférence du corps de structure lenticulaire du dispositif (4), étant espacées d'une manière égale les unes des autres et dirigées radialement vers le corps (17') tubulaire.

12. Installation suivant la revendication 1, **caractérisée en ce que** le troisième dispositif (5, 5') final de revêtement comprend une tête (205, 205') lenticulaire pour l'extrusion d'un manchon (27) de matière de revêtement ayant un trou (105) traversant central avec un trou (29) radial pour alimenter en la matière de revêtement par l'intermédiaire d'un conduit (28) extérieur correspondant, qui est prévu sur le bord (305) annulaire extérieur de la tête (205, 205') lenticulaire.

13. Installation suivant la revendication 1, **caractérisée en ce que** la tête (205) comprend une partie (30) postérieure, dans laquelle le trou (29) radial pour l'alimentation en matière de revêtement est prévu et une première lèvre (31) antérieure circulaire d'extrusion fixée à la partie postérieure par des moyens (52) appropriés, la première lèvre (31) antérieure circulaire d'extrusion étant reliée à une deuxième lèvre (32) circulaire disposée en dessous de la partie (30) postérieure de la tête et étant traversée par un canal (33) communiquant avec le trou (29) radial.

14. Installation suivant la revendication 12, **caractérisée en ce que** le trou (29) radial dans la partie postérieure de la tête (205) lenticulaire communique avec des canaux (48) pour la distribution de matière de revêtement prévus circonférentiellement dans la deuxième lèvre (32) circulaire.

15. Installation suivant la revendication 12, **caractérisée en ce que** la tête (205') lenticulaire d'extrusion comprend une première lèvre (34) antérieure circulaire d'extrusion et une deuxième lèvre (35) postérieure circulaire d'extrusion entre lesquelles est prévu un canal (36) pour former le manchon (27) de matière de revêtement, le canal (36) étant pourvu d'une première partie sensiblement verticale qui passe à travers un anneau (37) multiperforé et de distribution placé entre les lèvres (34, 35) circulaires et une deuxième partie qui est sensiblement longitudinale par rapport au corps (17") tubulaire demandant un revêtement et qui fait face à la partie antérieure de la tête (205') lenticulaire d'extrusion.

16. Installation suivant la revendication 1, **caractérisée en ce que** le troisième dispositif (5') comprend un corps (105') lenticulaire pourvu d'un trou (305') central traversant sur le bord (205') annulaire, sur lequel est placée une tête (308) tournante d'extrusion apte à former une bande (39) de maintien de revêtement extrudée sur le corps (17') tubulaire demandant un traitement.

17. Installation suivant la revendication 16, **caractérisée en ce que** la bande (39) enroulée sur le corps (1, 17, 17', 17") tubulaire est d'une forme quelconque, telle que d'une forme plate, d'une forme ondulée, d'une forme en Z, d'une forme en T, d'une forme tubulaire ou autres.

18. Installation suivant la revendication 16, **caractérisée en ce que** la tête (38) tournante d'extrusion comprend une ouverture (40) finale de section transversale croissante pour distribuer la bande (39) de matière de revêtement et est en communication avec le trou (29) radial distribuant de la matière de revêtement prévue dans le corps (105') lenticulaire, la tête (38) tournante étant fixée par un moyen (41) appropriée de fixation à un premier anneau (42) tournant qui est capable de se mouvoir par rapport à un deuxième anneau (44) fixe, qui est fixé au corps (105') lenticulaire par des moyens (45) appropriés et par des joints (46) annulaires appropriés qui sont prévus entre la tête (38) tournante et le corps (105') lenticulaire.

19. Installation suivant la revendication 18, **caractérisée en ce que** le premier anneau (42) tournant porte un rouleau de pression, de préférence en caoutchouc de silicone, qui effectue un mouvement de révolution en rotation autour du corps tubulaire demandant un revêtement.

20. Installation suivant la revendication 12, **caractérisée en ce que** le troisième dispositif (5") comprend un corps (105") lenticulaire ayant un trou (205") central traversant et un dévidoir (47) proche de son bord (305") extérieur annulaire, dévidoir autour duquel est enroulé un ruban (50) à une seule couche ou à plusieurs couches de matière en polyoléfine pour revêtir la surface extérieure du corps (17") tubulaire, le corps (105") tubulaire étant apte à tourner autour du corps tubulaire par l'intermédiaire de moyens (51) d'entraînement appropriés.
